# EUROPÄISCHE PATENTSCHRIFT

(11) **EP 0 746 490 B1**
(45) Veröffentlichungstag und Bekanntmachung des Hinweises auf die Patenterteilung: **22.07.1998**
(21) Anmeldenummer: 95909756.9
(22) Anmeldetag: 21.02.1995
(51) Int. Cl.: B62B 3/02

(54) **FAHRBARER REINIGUNGSWAGEN MIT ANHÄNGER**
DRIVABLE CLEANING VEHICLE WITH TRAILER
CHARIOT DE NETTOYAGE A REMORQUE

(30) Priorität: 02.03.1994 DE 4406749
(43) Veröffentlichungstag der Anmeldung: 11.12.1996
(73) Patentinhaber: Henkel-Ecolab GmbH & Co. OHG, 40554 Düsseldorf (DE)
(72) Erfinder: KRESSE, Franz, D-40723 Hilden (DE); OSBERGHAUS, Rainer, D-40593 Düsseldorf (DE); SCHUNTER, Roland, D-73547 Lorch (DE); FERNSCHILD, Hans-Leo, D-41352 Korschenbroich (DE)
(74) Vertreter: Wilk, Hans-Christof, Dr.
(86) Internationale Anmeldenummer: EP9500621
(87) Internationale Veröffentlichungsnummer: WO9523720

(56) Entgegenhaltungen:
- DE-A- 4 320 454
- US-A- 2 382 989
- US-A- 2 555 178

## Beschreibung

Die Erfindung bezieht sich auf einen Reinigungswagen, der zur Aufnahme und zum Transport von Behältern und Geräten zum gewerblichen Reinigen und Desinfizieren von Fußböden und anderen Flächen geeignet ist. Er besteht aus einem Hauptwagen mit Rädern und einem Anhängewagen mit Rädern sowie einer Kupplung zum Verbinden des Anhängewagens mit dem Hauptwagen.

Zum feuchten, nassen oder trockenen Reinigen von großen Fußbodenflächen wird zum Mitführen von Eimern für die Reinigungsflüssigkeit und das Schmutzwasser sowie von Wischmops und Müllsäcken und anderen Utensilien oft ein sogenannter Reinigungs-, Transport- oder Gerätewagen eingesetzt. In anderen bekannten Ausführungen ist der Reinigungswagen im Sinne dieser Erfindung als Desinfektions- oder Entsorgungswagen oder als Wertstoffsammler in Gebrauch. Diese Wagen werden ebenfalls von der Erfindung umfaßt.

Da die Reinigungswagen zum Abstellen bei Nichtgebrauch möglichst klein sein, aber während des Gebrauchs eine möglichst große Stellfläche haben sollen, ist es bekannt, Anhängewagen, die auch Nachläufer genannt werden, an den Reinigungswagen anzukoppeln. Der Hauptwagen und der Anhängewagen können nach Gebrauch auseinandergekoppelt und raumsparend im Abstellraum verstaut werden.

Die bekannten Anhängewagen sind über einen Knauf bei enger Berührung der Standholme an den Hauptwagen gekoppelt.

Möglich sind auch mehrere, in Fahrtrichtung vorn und / oder hinten an den Hauptwagen angehängte oder mehrere hintereinandergehängte Nachläufer. In dieser Anmeldung wird der Einfachheit halber im folgenden nur von einem in Fahrtrichtung hinter dem Hauptwagen angehängten Anhängewagen gesprochen. Die Erfindung ist aber nicht darauf beschränkt.

Beim Einsatz von Anhängewagen treten jedoch mehrere Probleme auf Beim Durchfahren von Kurven behindern sich die Räder von Haupt- und Anhängewagen. Bodenunebenheiten führen aufgrund der in vertikaler Richtung relativ starren Kupplung zu einem Abheben der Räder des Anhängewagens vom Boden.

Ein gattungsgemäßer Reinigungswagen ist aus der US-A-2555178 bekannt. Vor diesem Reinigungswagen ist der Anhängewagen längs einer Schwenkachse über seine gesamte Breite dauerhaft mit dem Hauptwagen verbunden. Bei Nichtgebrauch läßt sich der Anhängewagen am Hauptwagen in eine platzsparende Stellung hochklappen.

Der Erfindung liegt die Aufgabe zugrunde, eine lösbare Kupplung zwischen Hauptwagen und Anhängewagen zu schaffen, die das Lenken des Anhängewagens vom Hauptwagen aus ermöglicht, ohne das unerwünschte Bewegungen des Anhängewagens auftreten.

Bei einem Reinigungswagen der Eingangs bezeichneten Art wird diese Aufgabe dadurch gelöst, daß die Kupplung aus mindestens einem Anhängehaken und entsprechenden Anhängeösen besteht, in die der Anhängehaken eingreifen kann und daß die Form von Anhängehaken und Anhängeösen derart gestaltet ist, daß die Kupplung eine Drehbewegung des Anhängewagens um die Längsachse des hinteren Endes des Hauptwagens und / oder eine Vertikalbewegung des Anhängewagens gegenüber dem Hauptwagen gestattet, aber keine Bewegung des Anhängewagens in der Fahrebene gegenüber dem Hauptwagen zuläßt. Die erfindungsgemäße Kupplung zwischen Hauptwagen und Anhängewagen verhindert einerseits ein seitliches Ausschwenken des Anhängewagens in der Fahrebene, und Bodenunebenheiten führen nicht mehr zu den oben genannten Problemen. Andererseits ermöglicht die Kupplung eine exakte Lenkbarkeit des Anhängewagens.

Besonders günstig ist es, wenn der Anhängewagen mindestens zwei in Fahrtrichtung nebeneinander und im Abstand zueinander angeordnete Lenkrollen aufweist. Die Ausführung der Räder des Anhängewagens als Lenkrollen ermöglicht eine problemloses Mitführen und Lenken des Anhängewagens durch Schieben oder Ziehen des Hauptwagens. Es ist aber auch möglich und liegt im Rahmen der Erfindung, daß der Anhängewagen nur von einer einzigen Rolle getragen wird, die nicht als Lenkrolle ausgeführt zu sein braucht.

Nur eine einzige Anhängeöse und ein entsprechender paßgenauer Anhängehaken reichen aus, um die erfindungsgemäße Lösung zu erreichen. Vorteilhaft sind jedoch zwei Anhängeösen, in die jeweils ein Anhängehaken eingreifbar ist. Ein seitliches Ausschwenken wird hier auch bei weniger paßgenauen Kombinationen von Anhängeösen und -haken verhindert.

Die horizontale Verschiebbarkeit des Anhängewagens gegenüber dem Hauptwagen quer oder längs zur Fahrtrichtung kann durch unterschiedliche Ausführungen der Kupplung verhindert werden. In einer besonders einfachen Ausgestaltung der Erfindung entspricht der Querschnitt des zum Eingreifen in die Anhängeöse vorgesehenen Endes des Anhängehakens dem Öffnungsquerschnitt der Anhängeöse, so daß der Anhängehaken spielfrei in der Anhängeöse einliegt. Es reicht aber auch aus, wenn der Abstand der einander zugewandten Seitenflächen der Anhängehaken, der auch "innerer Abstand" genannt werden kann, im wesentlichen gleich dem Abstand der Innenfächen der Anhängeösen ist, denen die genannten Seitenflächen bei angekoppeltem Anhängewagen gegenüberliegen. Dabei kann in einer weiteren Ausführungsform der Erfindung zusätzlich vorgesehen sein, daß der Abstand der voneinander abgewandten Seitenflächen der Anhängehaken, der sogenannte "äußere Abstand", geringer als der Abstand der diesen Seitenflächen bei angekoppeltem Anhängeagen gegenüberliegenden Innenflächen der Anhängeösen ist. Der spielfreie Sitz der Anhängehaken in ihren Ösen wird durch die oben genannte Bemessung der inneren Abstände gewährleistet. Alternativ können im Fall des nicht spielfreien Sitzes des Anhängehakens in der Anhängeöse z. B. Rastelemente vorgesehen sein, die die Bewegungen nur in Fahrebene einschränken.

Die Drehbarkeit des Anhängewagens gegenüber dem Hauptwagen in der Fahrebene kann dadurch vermieden werden, daß die Außenfläche des Anhängehakens und die Innenfläche der Anhängeöse einen von der Kreisform abweichenden horizontalen Querschnitt haben. In einer besonders wirtschaftlichen Ausgestaltung wird vorgeschlagen, daß die Außenfläche des Anhängehakens und die Innenfläche der Anhängeöse einen langgestreckten horizontalen Querschnitt haben. Aber auch andere Möglichkeiten liegen im Rahmen der Erfindung. Beispiele alternativer Maßnahmen bilden die bereits erwähnten Rastelemente oder die Ausbildung einer Feder-Nut-Verbindung zwischen dem Haken und der Öse.

Der Einsatz von Anhängewagen ermöglicht zwar eine relativ große Stellfläche des Reinigungswagens bei gleichzeitig raumsparender Unterbringung. Dazu ist es bei bekannten Reinigungswagen aber notwendig, vor und nach dem Gebrauch den Anhängewagen an- bzw. abzukoppeln. Ein weiteres Problem stellt der für den Anhängewagen benötigte zusätzliche Abstellplatz dar, denn er entspricht der Stellfläche des Anhängewagens.

In einer weiteren Ausgestaltung der Erfindung werden diese Nachteile beseitigt, indem der Anhängehaken am Anhängewagen mit einer Strebe verbunden ist, deren Dicke in vertikaler Richtung etwa gleich der Öffnungsweite der Anhängeöse in Fahrtrichtung ist. Alternativ kann der Querschnitt der Strebe sich konisch in Richtung auf den Anhängehaken verkleinern oder vergrößern. Er sollte aber im Bereich des Anhängehakens die Öffnungsweite der Anhängeöse erreichen. Damit kann der Anhängewagen nach Gebrauch hochgeklappt werden. In diesem Zustand liegt nicht mehr das äußere Ende des Anhängehakens, sondern die genannte Strebe in der Anhängeöse ein. Da die Dicke der Strebe in vertikaler Richtung der Öffnungsweite der Anhängeöse angepaßt ist, rastet der Anhängewagen beim Hochklappen ein und wird sicher in dieser Lage gehalten.

Die Rüstzeiten werden verringert, denn ein zeitaufwendiges An- und Abkoppeln der Anhängewagen entfällt. Bei Nichtgebrauch benötigt der Anhängewagen nur noch einen Bruchteil der bisherigen Abstellfläche.

In einer besonders praktischen Ausführungsform des hochklappbaren Anhängewagens ist der Anhängehaken L-förmig ausgebildet, wobei das kürzere Ende zum Einhängen in die Anhängeöse vorgesehen und bei heruntergeklapptem Anhängewagen nach unten zeigt und das längere Ende, die Strebe, am Anhängewagen fest verbunden ist. Ist in diesem Fall außerdem eine Kehle an der Innenfläche des Anhängehakens zwischen dem längeren und dem kürzeren Ende vorgesehen und die Form des in Fahrtrichtung hintere Endes der Anhängeöse des Hauptwagens zum Einliegen in der Kehle angepaßt, so kann der Anhängewagen einerseits im Gebrauch um die Verbindungslinie der Anhängeösen des Hauptwagens gedreht und andererseits danach hochgeklappt werden. Diese Ausgestaltung ist außerdem besonders wirtschaftlich zu realisieren.

Im folgenden wird ein / mehrere Ausführungsbeispiel der Erfindung anhand von Zeichnungen näher beschrieben. Es zeigen
- Figur 1: eine Seitenansicht eines Reinigungswagens mit Hauptwagen und einem Anhängewagen in einer Ausführungsform der Erfindung,
- Figur 2: den eine Aufsicht auf die Kupplung zwischen Haupt- und Anhängewagen des Reinigungswagens nach Figur 1,
- Figur 3: den Schnitt A-A der Kupplung nach Figur 2 im heruntergeklappten Zustand des Anhängewagens und
- Figur 4: den Schnitt A-A der Kupplung nach Figur 2 im hochgeklappten Zustand des Anhängewagens.

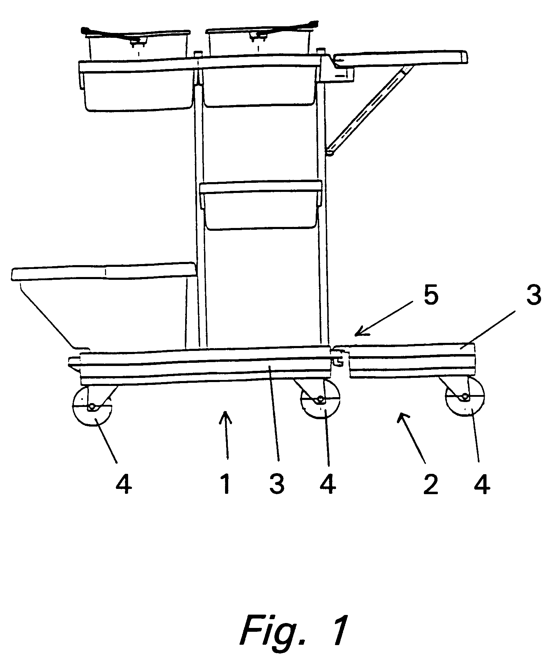

Der in Figur 1 dargestellte Reinigungswagen besteht aus einem Hauptwagen 1 und einem angekoppelten Anhängewagen 2. Der Hauptwagen 1 und der Anhängewagen 2 haben eine Grundplatte 3 mit Lenkrollen 4. In diesem Fall trägt die Grundplatte 3 des Hauptwagens 1 einen Aufbau zur platzsparenden Aufnahme von Schalen und Eimern. Der Hauptwagen 1 ist mit vier Lenkrollen, der Anhängewagen 2 mit zwei Lenkrollen 4 ausgestattet. Das zweite, nicht in der Figur dargestellte Rad des Anhängewagens 2 wird durch das erste verdeckt.

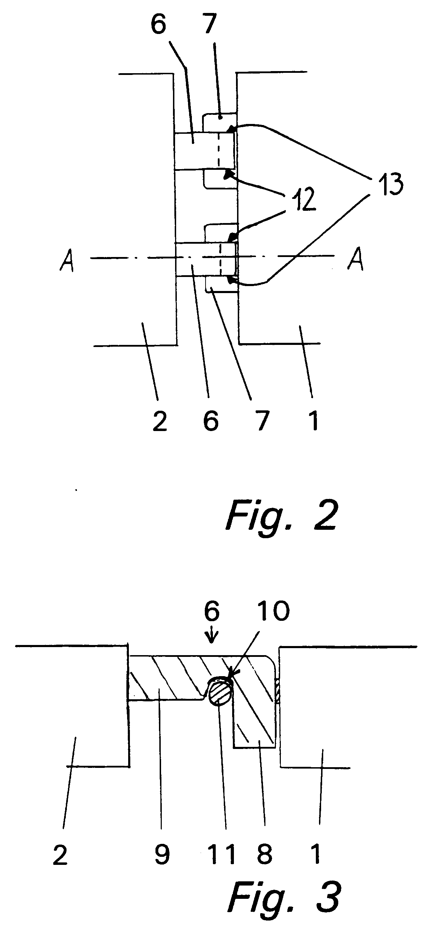

Der Anhängewagen 2 ist über eine in den Figuren 2 bis 4 im einzelnen dargestellte Kupplung 5 mit dem Hauptwagen 1 verbunden. Die Kupplung 5 setzt sich aus zwei Anhängehaken 6 des Anhängewagens 2 und zwei Anhängeösen 7 des Hauptwagens 1 zusammen. Im heruntergeklappten Zustand liegt der im Querschnitt L-förmige Anhängehaken 6 mit seinem kürzeren Ende 8 in der Öffnung der Anhängeöse 7 ein, wie es in Figur 3 gezeigt ist. Der Querschnitt des kürzeren Endes 8 entspricht dem Öffnungsquerschnitt der Anhängeöse 7, so daß der Anhängewagen 2 sich nicht gegenüber dem Hauptwagen 1 in der Fahrebene verschieben und insbesondere nicht ausschwenken kann. Zwischen dem kürzeren Ende 8 und dem längeren Ende 9, der Strebe, mit dem der Anhängehaken 6 am Anhängewagen 2 befestigt ist, befindet sich eine Kehle 10, in der das hintere Ende 11 der Anhängeöse 7 einliegt. Damit wird eine Drehbarkeit des Anhängewagen 2 um die Längsachse des hinteren Endes 11 des Hauptwagens 1 erreicht

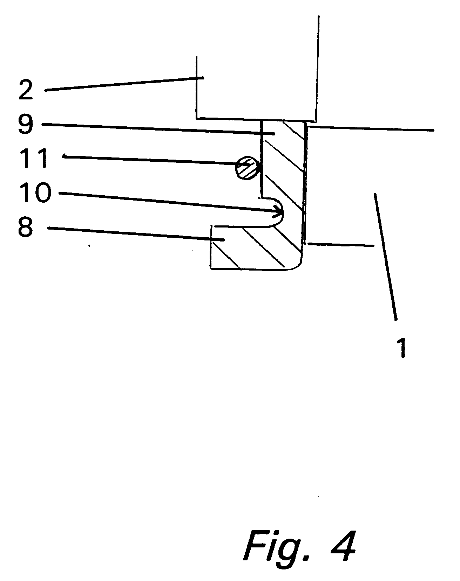

Auch der Querschnitt der Strebe 9 des Anhängehakens 6 entspricht der Öffnungsweite der Anhängeöse 7. Auf diese Weise läßt sich der Anhängewagen 2 am Hauptwagen 1 Hochklappen und gleichzeitig einrasten, wie es in Figur 4 dargestellt ist. Hier, wie auch in den übrigen Zeichnungen, haben gleiche Bezugszeichen die gleiche Bedeutung und werden daher nicht noch einmal erläutert.

### Bezugszeichenliste

- 1: Hauptwagen
- 2: Anhängewagen
- 3: Grundplatte
- 4: Lenkrollen
- 5: Kupplung
- 6: Anhängehaken
- 7: Anhängeöse
- 8: kürzeres Ende
- 9: längeres Ende, Strebe
- 10: Kehle
- 11: hinteres Ende
- 12: (innere) Seitenfläche der Anhängehaken; Innenfläche der Anhängeöse; innerer Abstand
- 13: (äußere) Seitenfläche der Anhängehaken; Innenfläche der Anhängeöse; äußerer Abstand

## Patentansprüche

1. Reinigungswagen, der zur Aufnahme und zum Transport von Behältern und Geräten zum gewerblichen Reinigen und Desinfizieren von Fußböden und anderen Flächen geeignet ist, bestehend aus einem Hauptwagen (1) mit Rädern (4) und einem Anhängewagen (2) mit Rädern (4) sowie einer Kupplung (5) zum Verbinden des Anhängewagens (2) mit dem Hauptwagen (1),
**dadurch gekennzeichnet,**
daß die Kupplung (5) aus mindestens einem Anhängehaken (6) und entsprechenden Anhängeösen (7) besteht, in die der Anhängehaken (6) eingreifen kann und daß die Form von Anhängehaken (6) und Anhängeösen (7) derart gestaltet ist, daß die Kupplung (5) eine Drehbewegung des Anhängewagens (2) um die Längsachse des hinteren Endes des Hauptwagens (1) und/oder eine Vertikalbewegung des Anhängewagens (2) gegenüber dem Hauptwagen (1) gestattet, aber keine Bewegung des Anhängewagens (2) in der Fahrebene gegenüber dem Hauptwagen (1) zuläßt.

2. Reinigungswagen nach Anspruch 1,
**dadurch gekennzeichnet**,
daß der Anhängewagen (2) mindestens zwei in Fahrtrichtung nebeneinander und im Abstand zueinander angeordnete Lenkrollen (4) aufweist.

3. Reinigungswagen nach Anspruch 1 oder 2,
**gekennzeichnet durch**
zwei Anhängeösen (7), in die jeweils ein Anhängehaken (6) eingreifbar ist.

4. Reinigungswagen nach einem der Ansprüche 1 bis 3,
**dadurch gekennzeichnet,**
daß der Querschnitt des zum Eingreifen in die Anhängeöse (7) vorgesehenen Endes (8) des Anhängehakens (6) dem Öffnungsquerschnitt der Anhängeöse (7) entspricht.

5. Reinigungswagen nach Anspruch 3 oder 4,
**dadurch gekennzeichnet**,
daß der Abstand der einander zugewandten Seitenflächen (12) der Anhängehaken (6) im wesentlichen gleich dem Abstand der Innenflächen (12) der Anhängeösen (7) ist, denen die genannten Seitenflächen (12) bei angekoppeltem Anhängewagen (2) gegenüberliegen.

6. Reinigungswagen nach Anspruch 5,
**dadurch gekennzeichnet**,
daß der Abstand der voneinander abgewandten Seitenflächen (13) der Anhängehaken (6) geringer ist als der Abstand der diesen Seitenflächen (13) bei angekoppeltem Anhängewagen (2) gegenüberliegenden Innenflächen (13) der Anhängeösen (7).

7. Reinigungswagen nach einem der Ansprüche 1 bis 6,
**dadurch gekennzeichnet**,
daß die Außenfläche des Anhängehakens (6) und die Innenfläche der Anhängeöse (7) einen von der Kreisform abweichenden horizontalen Querschnitt haben.

8. Reinigungswagen nach Anspruch 7,
**dadurch gekennzeichnet**,
daß die Außenfläche des Anhängehakens (6) und die Innenfläche der Anhängeöse (7) einen langgestreckten horizontalen Querschnitt haben.

9. Reinigungswagen nach einem der Ansprüche 1 bis 8,
**dadurch gekennzeichnet**,
daß der Anhängehaken (6) am Anhängewagen (2) mit einer Strebe (9) verbunden ist, deren Dicke in vertikaler Richtung etwa gleich der Öffnungsweite der Anhängeöse (7) in Fahrtrichtung ist.

10. Reinigungswagen nach einem der Ansprüche 1 bis 8,
**dadurch gekennzeichnet**,
daß der Anhängehaken (6) am Anhängewagen (2) mit einer Strebe (9) verbunden ist, deren Querschnitt sich konisch in Richtung auf den Anhängehaken (6) verkleinert oder vergrößert, aber im Bereich des Anhängehakens (6) die Öffnungsweite der Anhängeöse (7) erreicht.

11. Reinigungswagen nach Anspruch 9 oder 10,
**dadurch gekennzeichnet**,
daß der Anhängehaken (6) L-förmig ausgebildet ist, wobei das kürzere Ende zum Einhängen in die Anhängeöse (7) vorgesehen und bei heruntergeklapptem Anhängewagen (2) nach unten zeigt und das längere Ende, die Strebe (9), am Anhängewagen (2) fest verbunden ist.

12. Reinigungswagen nach Anspruch 11,
**gekennzeichnet durch**
eine Kehle (10) an der Innenfläche des Anhängehakens (6) zwischen dem längeren und dem kürzeren Ende (9, 8), wobei die Form des in Fahrtrichtung hintere Endes der Anhängeöse (7) des Hauptwagens (1) zum Einliegen in der Kehle (10) angepaßt ist.

## Claims

1. A cleaning trolley suitable for accommodating and transporting containers and utensils for the institutional cleaning and disinfection of floors and other surfaces, consisting of a main trolley (1) with wheels (4) and a trailer (2) with wheels (4) and of a coupling (5) for connecting the trailer (2) to the main trolley (1), characterized in that the coupling (5) consists of at least one coupling hook (6) and corresponding coupling eyes (7) in which the coupling hook (6) is designed to engage and in that the shape of the coupling hook(s) (6) and coupling eyes (7) is such that the coupling (5) allows the trailer (2) to make a turning movement about the longitudinal axis of the rear end of the main trolley (1) and/or a vertical movement relative to the main trolley (1), but does not allow the trailer (2) to move in the plane of travel relative to the main trolley (1).

2. A cleaning trolley as claimed in claim 1, characterized in that the trailer (2) comprises at least two casters (4) arranged adjacent one another in the direction of travel and at a distance from one another.

3. A cleaning trolley as claimed in claim 1 or 2, characterized by two coupling eyes (7) in each of which a coupling hook (6) is designed to engage.

4. A cleaning trolley as claimed in any of claims 1 to 3, characterized in that the cross-section of that end (8) of the coupling hook (6) which is designed to engage in the coupling eye (7) corresponds to the opening cross-section of the coupling eye (7).

5. A cleaning trolley as claimed in claim 3 or 4, characterized in that the distance between the mutually opposite side faces (12) of the coupling hooks (6) is substantially equal to the distance between the inner faces (12) of the coupling eyes (7) which the side faces (12) mentioned are opposite when the trailer (2) is in the coupled position.

6. A cleaning trolley as claimed in claim 5, characterized in that the distance between the remote side faces (13) of the coupling hooks (6) is narrower than the distance between the inner faces (13) of the coupling eyes (7) which are opposite those side faces (13) in the coupled position of the trailer (2).

7. A cleaning trolley as claimed in any of claims 1 to 6, characterized in that the outer face of the coupling hook (6) and the inner face of the coupling eye (7) have a non-circular horizontal cross-section.

8. A cleaning trolley as claimed in claim 7, characterized in that the outer face of the coupling hook (6) and the inner face of the coupling eye (7) have an elongate horizontal cross-section.

9. A cleaning trolley as claimed in any of claims 1 to 8, characterized in that the coupling hook (6) on the trailer (2) is connected to a stay (9) of which the thickness in the vertical direction is substantially equal to the opening width of the coupling eye (7) in the direction of travel.

10. A cleaning trolley as claimed in any of claims 1 to 8, characterized in that the coupling hook (6) is connected to the trailer (2) by a stay (9) of which the cross-section may taper or widen conically towards the coupling hook (6) but reaches the opening width of the coupling eye (7) in the vicinity of the coupling hook (6).

11. A cleaning trolley as claimed in claim 9 or 10, characterized in that the coupling hook (6) is L-shaped, the shorter end being designed to engage in the coupling eye (7) and pointing downwards in the unfolded position of the trailer (2) and the longer end, the stay (9), being fixedly connected to the trailer (2).

12. A cleaning trolley as claimed in claim 11, characterized by a groove (10) in the inner face of the coupling hook (6) between the longer end and the shorter end (9,8), the shape of the rear end - in the direction of travel - of the coupling eye (7) of the main trolley (1) being adapted to fit in the groove (10).

## Revendications

1. Chariot de nettoyage, conçu pour recevoir et transporter des récipients et des appareils servant à nettoyer industriellement et désinfecter des planchers et autres surfaces, composé d'un chariot principal (1) et d'un chariot remorqué (2) tous deux montés sur des roulettes (4) et reliés par un accouplement (5),
caractérisé en ce que
l'accouplement (5) est composé d'au moins un crochet de remorquage (6) et de l'oeil de remorquage (7) correspondant dans lequel peut venir en prise le crochet de remorquage (6), les crochets (6) et les yeux (7) ayant des formes telles que l'accouplement (5) permet au chariot remorqué (2) de tourner autour de l'axe longitudinal de l'extrémité arrière du chariot principal (1) et/ou de se déplacer verticalement par rapport au chariot principal (1), sans que ce dernier puisse se déplacer dans le plan de roulement par rapport au chariot principal.

2. Chariot de nettoyage selon la revendication 1,
caractérisé en ce que
le chariot remorqué (2) est équipé de deux roulettes orientables (4) situées côte à côte selon la direction de marche de chariot, avec un certain espacement entre elles.

3. Chariot de nettoyage selon la revendication 1 ou 2,
caractérisé en ce qu'
il comporte deux yeux de remorquage (7) dans chacun desquels peut venir en prise un crochet de remorquage (6).

4. Chariot de nettoyage selon l'une des revendications 1 à 3,
caractérisé en ce que
la section de l'extrémité (8) du crochet (6) prévue pour venir en prise dans l'oeil de remorquage (7) correspond à la section de l'ouverture de cet oeil.

5. Chariot de nettoyage selon les revendications 4 ou 5,
caractérisé en ce que
la distance entre les faces latérales en regard (12) du crochet de remorquage (6) est sensiblement égale à la distance entre les faces internes (8) des yeux de remorquage situées en regard des faces latérales indiquées (12) lorsque le chariot remorqué (2) est accouplé.

6. Chariot de nettoyage selon la revendication 5,
caractérisé en ce que
la distance des faces latérales (13), se tournant le dos, du crochet de remorquage (6) est inférieure à la distance entre les faces internes (13) des yeux de remorquage (7) situées en regard des faces latérales indiquées (12), lorsque le chariot remorqué (2) est accouplé.

7. Chariot de nettoyage selon une des revendications 1 à 6,
caractérisé en ce que
la surface externe du crochet de remorquage (6) et la surface interne de l'oeil de remorquage (7) ont une section horizontale s'écartant de la forme d'un cercle.

8. Chariot de nettoyage selon la revendication 7,
caractérisé en ce que
la surface externe du crochet de remorquage (6) et la surface interne de l'oeil de remorquage (7) ont une section horizontale allongée longitudinalement.

9. Chariot de nettoyage selon l'une des revendications 1 à 8,
caractérisé en ce que
le crochet de remorquage (6) est relié au chariot remorqué (2) par une barre (9) dont l'épaisseur en direction verticale est sensiblement égale à la largeur de l'ouverture de l'oeil (7), dans la direction de roulement.

10. Chariot de nettoyage selon une des revendications 1 à 8,
caractérisé en ce que
le crochet de remorquage (6) est relié au chariot remorqué (2) par une barre (9), dont la section croît ou diminue de manière conique, en direction du crochet de remorquage, pour atteindre dans la zone du crochet (6) la largeur d'ouverture de l'oeil (7).

11. Chariot de nettoyage selon une des revendications 9 ou 10,
caractérisé en ce que
le crochet de remorquage (6) a une forme de L dont la branche courte est prévue pour s'accrocher dans l'oeil de remorquage (7) et se trouve dirigée vers le bas quand le chariot remorqué est en position rabattue, tandis que la branche longue, c'est-à-dire la barre (9), est solidaire du chariot remorqué.

12. Chariot de nettoyage selon la revendication 11,
caractérisé en ce qu'
une gorge (10) est creusée dans la face interne du crochet de remorquage (6), entre les branches longue et courte (8, 9), la forme de l'extrémité arrière par rapport au sens de roulement, de l'oeil (7) du chariot principal (1) étant adaptée pour se loger dans la gorge (10).
